# EUROPÄISCHE PATENTSCHRIFT

(11) **EP 2 526 315 B1**
(45) Veröffentlichungstag und Bekanntmachung des Hinweises auf die Patenterteilung: **14.05.2014**
(21) Anmeldenummer: 12704903.9
(22) Anmeldetag: 24.01.2012
(51) Int. Cl.: F16D 7/00

(54) **SICHERHEITSKUPPLUNG**
SAFETY CLUTCH
ACCOUPLEMENT LIMITEUR DE COUPLE

(30) Priorität: 24.01.2011 DE 102011009313
(43) Veröffentlichungstag der Anmeldung: 28.11.2012
(73) Patentinhaber: R+W Antriebselemente GmbH, 63911 Klingenberg (DE)
(72) Erfinder: RIMPEL, Andreas, 63933 Mönchberg (DE)
(74) Vertreter: Säger, Manfred
(86) Internationale Anmeldenummer: PCT/IB2012/000105
(87) Internationale Veröffentlichungsnummer: WO 2012/101504

(56) Entgegenhaltungen:
- DE-U1- 8 623 878
- US-A- 2 253 466
- US-A- 2 753 029
- US-A- 3 132 730
- US-A- 3 924 421
- US-A- 4 768 991

## Beschreibung

Die Efindung betrifft eine bekannte gattungsgemäße Sicherheitskupplung nach dem Oberbegriff des Hauptanspruchs nämlich eine bei Überschreiten eines einstellbaren Überlastdrehmomentes bei Überlast aus einer Antriebslage in einen Freilauf auskuppelnde Sicherheitskupplung, mit einem um eine Drehachse drehbaren treibenden Flansch und einem um dieselbe Drehachse *drehbaren* angetriebenen Kupplungsteil, *wobei der Flansch auf einem Lochkreis Ausnehmungen und das Kupplungsteil in der Antriebslage Rastkugeln in die Ausnehmungen unter einer Federkraft hineindrückende, eine drehfeste Verbindung zwischen dem Flansch und dem Kupplungsteil bewirkende und bei Überschreiten des Überfastdrehmoments die Freigabe der drehfesten Verbindung unter Auskuppeln in den Freilauf bewirkende Halteeinrichtungen nebst einem Gehäuse aufweist, wobei jeder Rastkugel eine einzige Halteeinrichtung zugeordnet ist und sich die Rastkugel von der Antriebslage entgegen der Federkraft aus der Ausnehmung in den Freilauf herausbewegt und an einem längs eines Gehäuses der Halteeinrichtung geführten Stößel angeordnet ist, der eine die Federkraft erzeugende Feder aufweist, wobei der Stoßel einen zwei Zylinderräume voneinander trennenden hydraulischen Kolben von seiner der Antriebslage entsprechenden Ruhelage in eine dem Freilauf entsprechende Haltelage unter Verdrängung von Hydraulikflüssigkeit von dem einen Zylinderraum über zumindest eine wenigstens ein zu diesem hin öffnendes (und zu dem anderen Zylinderraum hin schließendes) Rückschlagventil aufweisende Verbindung in den anderen Zylinderraum bewegt (vgl. Druckschrift* DE 86 23 878 U1*).*

Sicherheitskupplungen dieser Art sind in einer Vielzahl von Ausführungsformen bekannt (DE 41 20 107 A1, DE 197 39 469 A1, DE 101 43 583 B4 und DE 10 2006 050 995 A1) und haben sich bewährt. Dabei können der Lochkreis auf der ebenen Stirnseite oder dem Mantel des Flansches vorgesehen werden und die Rasteinrichtungen entweder als einfache federbelastete Rastkugeln, oder auch als mehrere am Unfang verteilt angeordnete Stößel, ggf. mit einer vorderen Rastkugel als sogenannte Schaltsegmente ausgebildet sein, die formschlüssig in eine auf dem Flansch vorgesehenen Kalotte als Ausnehmung mittels der Kraft der Feder eingedrückt sind. Bei Überlast bewegen sich die Rastkugeln in Umfangsrichtung und zugleich in axialer Richtung entgegen der Kraft der Feder aus der Kalotte und bewirken als Halteeirichtung ein andauerndes Auskuppeln bis zum manuellen Wieder-Einkuppeln der Sicherheitskupplung durch deren Rückstellelement, weil sie reibungs- und/oder formschlüssig in dieser Stellung von Sperrsegmenten gehalten verbleiben, wobei im Freilauf der Stössel an seinem freien Ende über das Gehäuse hinausragt.

Zum Wiedereinkuppeln muss der Stössel wieder in seine Antriebslage gebracht werden. Das geschieht in praxi mit einem Schlag eines Kunststoffhammers als Rückstellelement auf das freie, aus dem Gehäuse herausragende Ende des Stössel zu dessen Lösen. Dabei ist aber zusätzlich darauf zu achten, dass sich der Stössel bzw. dessen Rastkugeln gegenüber der Ausnehmung befindet, weil nur so die der Freilauf beendet und die Antriebslage wieder eingenommen werden kann.

Eine solche bekannte Sicherheitskupplung weist also in der Antriebslage keine relative Drehbewegung zwischen dem Flansch und dem Kupplungsteil auf. Sie kuppelt nur bei Überschreiten eines einstellbaren Überlastdrehmomentes bei Überlast von einer Antriebslage in einen Freilauf aus, in welchem sie eine relative Drehbewegung in einer Drehrichtung zu dem Flansch aufweist und in welchem sie bis zur Rückstellung verbleibt. Dabei wird das angetriebene Teil wegen der kraftschlüssigen Verbindung zu der angeschlossenen Last stehen bleiben und sich nicht mehr weiterdrehen, wohingegen das treibende Teil sich weiterdreht, weshalb sich die Relativbewegung in der genannten einen Drehrichtung einstellt.

Nach dem Auskuppeln der Sicherheitskupplung muss diese wieder in die Antriebslage gebracht werden. Hierzu ist es notwendig, den Flansch wieder in die definierte Drehlage zu dem Kupplungsteil zu bringen, was eine ganz genaue Einstellung erfordert. Danach muss der Freilauf zurückgestellt und wieder in die Antriebslage gebracht werden. Beides geschieht beim Stand der Technik manuell, was z.T. kraftraubend, zeitaufwändig und daher unerwünscht ist, ganz abgesehen davon, dass z.B. bei Tunnelvortriebsmaschinen die einzukuppelnden Teile in der Betriebslage gar nicht zugänglich sind.

Der Erfindung liegt die Aufgabe zugrunde, eine gattungsgemäße Sicherheitskupplung nach dem Oberbegriff des Hauptanspruchs so weiter auszugestalten, dass sie nach dem Auskuppeln bei Überlast wieder leicht und in einfacher Art und Weise wieder in die Antriebslage selbsttätig einkuppelbar ist.

Diese Aufgabe wird bei einer gattungsgemäßen Sicherheitskupplung nach dem Oberbegriff des Hauptanspruchs erfindungsgemäß durch dessen kennzeichnende Merkmale, also dadurch gelöst, *dass ein Rückstellelement als 2*/*2-Ventil ausgebildet ist, das in seiner einen Schaftstellung das Fließen der Hydraulikflüssigkeit in den anderen Zylinderraum sperrt und in seiner anderen Schaltstellung die beiden Zylinderräume miteinander verbindet,* dass das Kupplungsteil eine an diesem drehbar um eine Achse gelagerte Rolle mit einem radial vorspringenden Schaltzapfen aufweist, dass der Flansch mit einer Schaftöffnung für den Schaltzapfen versehen ist, die von dem Schaltzapfen in der einen Drehrichtung überfahren wird und in die der Schaltzapfen nur in der anderen Drehrichtung eintaucht, dass das *2*/*2-Wege-Ventil* in der Schaltöffnung angeordnet ist und dass der in der anderen Drehrichtung in die Schaltöffnung eintauchende Schaltzapfen das *in der Schaltöffnung angeordnete 2*/*2-Wege-Ventil* in der definierten Antriebslage des Kupplungsteils und des Flansches zueinander *unter Schalten in die die beiden Zylinderräume miteinander verbindende andere Schaltstellung* betätigt. Statt des Flansches oder des Kupplungsteiles können auch von diesen angetriebene Teile erfindungsgemäß Verwendung finden. Das Rückstellelement kann mechanisch, elektrisch oder hydraulisch wirkend sein.

Bei Überschreiten einer Überlast geht die Sicherheitskupplung in den Freilauf über und verbleibt in diesem. Wegen der kraftschlüssigen Verbindung des Kupplungsteils zu der bremsenden angeschlossenen Last einerseits und des weiter von z.B. einem Motor in Bewegung gehaltenen treibenden Flansches stellt sich zwischen den Teilen eine zunehmende Relativbewegung in der einen Drehrichtung ein. Während dieser wird die Schaltöffnung von dem Schaltzapfen überfahren. Wird danach der Motor und dabei auch der Flansch in die andere Drehrichtung reversiert, so taucht der Schaltzapfen in die Schahöffnung ein und betätigt dabei das darin befindliche Rückstellelement, wodurch die Sicherheitskupplung wieder selbsttätig ohne jeglichen manuellen Eingriff eingekuppelt wird, und zwar an der definierten Lage von Flansch und Kupplungsteil zueinander, ohne das zuvor diese Lage von Hand genauestens eingestellt werden müsste, weil eben der Schaltzapfen in die Schaltöffnung nur genau bei der definierten Antriebslage eintaucht. Nach erneutem Reversieren ist die Sicherheitskupplung erneut einsatzbereit.

Zweckmäßigerweise ist dabei die Rolle in einem zu dem Flansch hin mit einer Öffnung versehenen Schlitten angeordnet ist, über die sie hervorsteht.

Um einen guten Reibschluss der Rolle an dem Flansch zu erhalten, ist der Schlitten mit der Kraft einer Feder in Richtung des Flansches beaufschlagt.

Weitere zweckmässige Ausgestaltungen und Weiterbildungen der Erfindung sind in den Unteransprüchen gekennzeichnet.

Mit einem hydraulischen Rückstellelement versehene Ausführungsbeispiele werden nachfolgend unter Bezugnahme auf die Zeichnung näher erläutert. In dieser zeigt:
- Figur 1: eine erste Ausführungsform der Sicherheitskupplung mit den funktionalen Teilen, in Antriebslage und im schematischen Schnitt;
- Figur 2: eine zweite Ausführungsform der Sicherheitskupplung, in Antriebslage und im schematischen Schnitt;
- Figur 3: die Sicherheitskupplung gemäss Fig.1, im Freilauf und im schematischen Schnitt;
- Figur 4: die Sicherheitskupplung gemäss Fig.2, im Freilauf und im schematischen Schnitt;
- Figur 5: die Sicherheitskupplung gemäss Fig.1, im grösserem Massstab;
- Figur 6: die Sicherheitskupplung gemäss Fig.2, im grösserem Massstab;
- Fig. 7-10: Flansch und Kupplungsteil der Sicherheitskupplung in verschiedenen Betriebsständen.

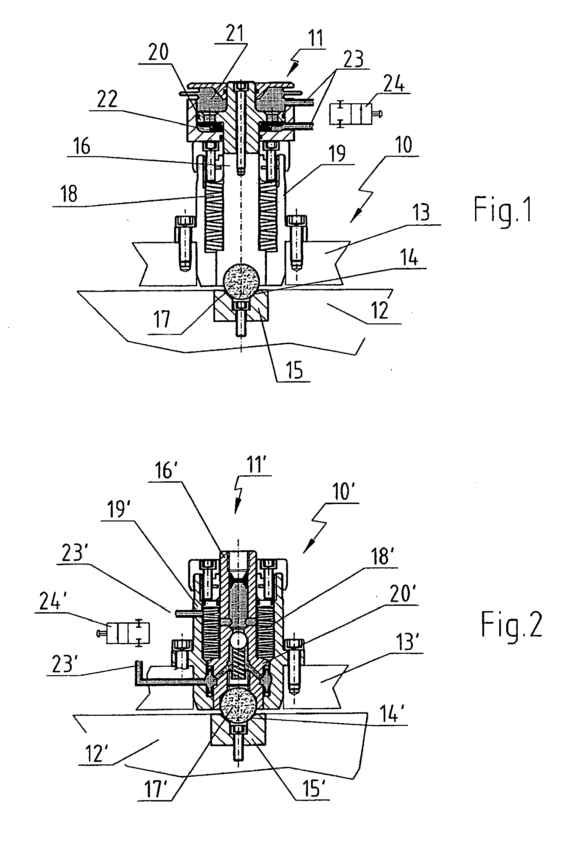

Es ist in Figur 1 ein Ausschnitt einer ersten Ausführungsform einer bei Überschreiten eines einstellbaren Überlastdrehmomentes bei Überlast aus einer Antriebslage auskuppelnde Sicherheitskupplung 10 mit einem Schaltsegment 11 als Rasteirichtung dargestellt. Sie weist einen um eine Drehachse drehbaren treibenden Flansch 12 und ein um dieselbe Drehachse drehbaren angetriebenen Kupplungsteil 13 auf. Die beiden Teile 12,13 werden, wie gezeigt, in der drehfesten Verbindung gehalten, und zwar von dem als Halteeinrichtung dienenden Schaltsegment 11. Diese ist als an dem Kupplungsteil 13 festgelegter Stössel 16 mit einer Rastkugel 17 an seinem vorderen Ende ausgebildet, die unter der Kraft einer Feder 18 steht.

Der Flansch 12 weist gleichmässig an Umfang eines Lochkreises verteilte Ausnehmungen 14 an einem eingesetzten Ring bzw. Einrastringflansch 15 auf, in die die Rastkugel 17 des Stössels 16 der Rasteinrichtung 11 mit der Kraft der Feder 16 eingepresst wird.

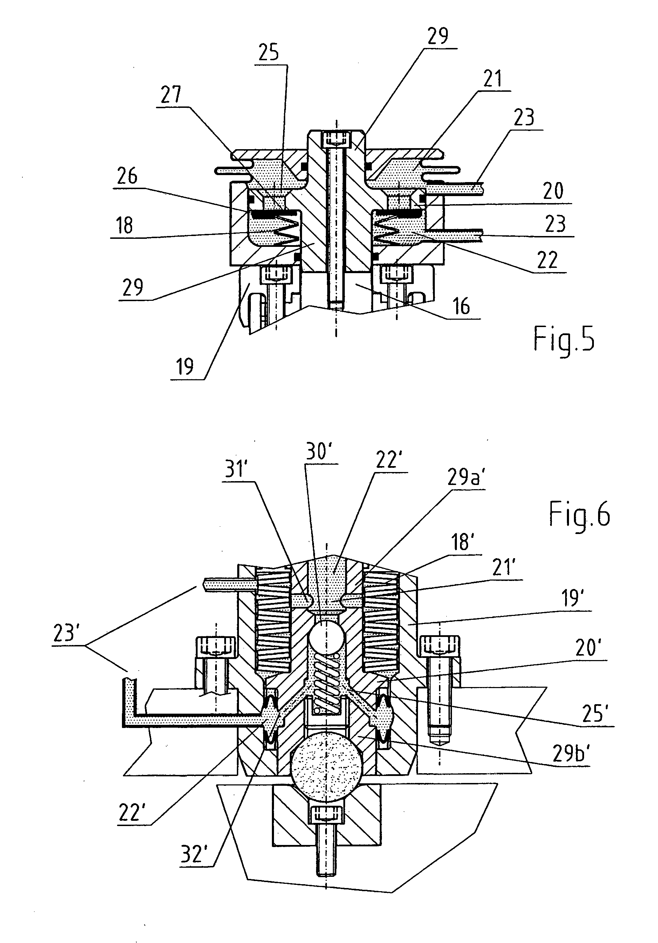

Auf den Stössel 16 ist an dessen freiem Ende ein zwei (hydraulische) Zylinderräume 21,22 voneinander trennender Kolben 20 angeschraubt, die über zumindest eine Verbindung 23 miteinander verbunden sind. Diese verbindende Leitung weist noch ein Zweiwege-Zweipositions-Ventil (2/2-Ventil) 24 auf, das in seiner einen Schaltstellung das Fliessen der Hydraulikflüssigkeit in den anderen Zylinderraum sperrt und in seiner manuell zu bewirkenden anderen Schaltstellung die beiden Zylinderräume 21,22 miteinander verbindet. Dieser Teil ist in Figur 5 näher dargestellt. Wie daraus entnehmbar, ist das zumindest eine Rückschlagventil in wenigstens einer die beiden Zylinderräume verbindenden Öffnung 25 des Kolbens 20 vorgesehen. Es ist als die Öffnung 25 von einer Seite verschliessende Ventilplatte 26 ausgebildet, die von einer Andrückfeder 18 in Richtung auf den Kolben 20 gedrückt wird, an den sich zwei Kolbenstangen 29 in jeden Zylinderraum 21,22 anschliessen. Es ist aber auch eine Ausführungsform mit nur einer Kolbenstange möglich.

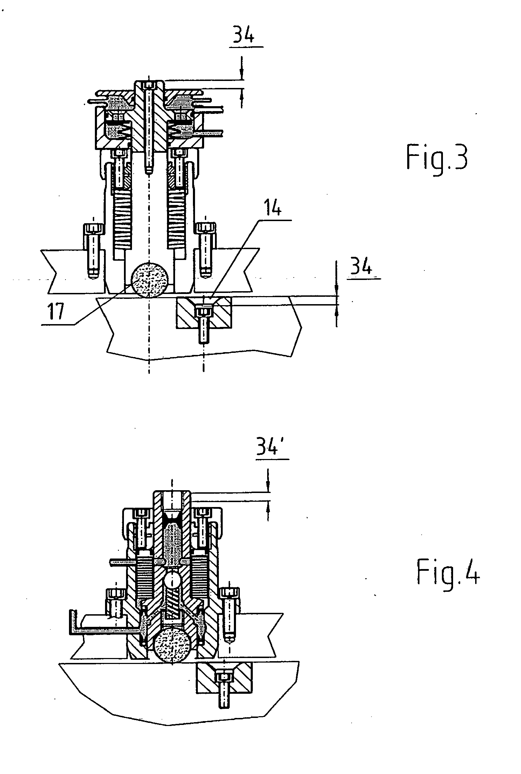

Bei Überschreiten des Überlastdrehmoments wird die Freigabe der drehfesten Verbindung durch das Auskuppeln in den Freilauf durch die Halteeinrichtungen bewirkt, die ein Gehäuse 19 aufweist, wobei jeder Rastkugel 17 genau eine einzige Halteeinrichtung zugeordnet ist und sich die Rastkugel 17 von der Antriebslage entgegen der Kraft der Feder aus der Ausnehmung 14 in den Freilauf herausbewegt. Dabei wird der längs des Gehäuses 19 der Halteeinrichtung geführte Stössel 16 entgegen der Federkraft (in der Zeichnung nach oben) um den Schaltweg 34 bewegt und kommt, wie in Figur 3 gezeigt, frei.

Dabei bewegt der Stössel 16 den die zwei Zylinderräume 21,22 voneinander trennenden hydraulischen 20 Kolben von seiner der Antriebslage entsprechenden Ruhelage in eine dem Freilauf entsprechende Haltelage unter Verdrängung von Hydraulikflüssigkeit von dem einen Zylinderraum 21 über die das zu diesem hin öffnende (und zu dem anderen Zylinderraum 22 hin schliessende) Rückschlagventil 26,27 aufweisende Verbindung 23 in den anderen Zylinderraum 22. Wegen des Rückschlageventils 26,27 kann die Hydraulikflüssigkeit nicht von dort (22) in den einen Zylinderraum 21 fliessen, wenn das Zweiwege-Zweipositions-Ventil (2/2-Ventil) 24 sich in seiner einen Schaltstellung befindet, die das Fliessen der Hydraulikflüssigkeit in den anderen Zylinderraum 22 sperrt.

Die in den Figuren 1, 3 und 5 gezeigte erste Ausführungsform ist zur Nachrüstung von bestehenden Sicherheitskupplungen geeignet. Demgegenüber ist die in den Figuren 2, 4 und 6 gezeigte zweite Ausführungsform mit integrierter Halteeinrichtung kompakter aufgebaut. Alle identischen und gleich wirkenden Teile sind mit demselben Bezugszeichen gekennzeichnet, das allerdings zur Unterscheidung mit einem ' versehen ist. Wärend bei der ersten Ausführungsorm die Durchmesser beider Zylinderräume und die in jedem Zylinderraum befindliche Kolbenstange des einzigen Kolbens jeweils gleich gross bemessen sind, was bei der Verdrängung von Hydraulikflüssigkeit aus dem einen Zylinderraum dazu führt, dass derselbe Rauminhalt in dem anderen Zylinderraum frei wird zur Aufnahme genau der verdrängten Hydraulikflüssigkeit, ist das bei der zweiten Ausführungsform nicht so, weshalb dort ein Ausgleichsbehälter mit gepufferter Hydraulikflüssigkeit vorgesehen sein muss.

In Figur 6 ist die zweite Ausführungsform näher dargestellt. Ersichtlich ist auch dort der Kolben 20' mit einer als Öffnungen 25' ausgebildeten Verbindung, zusätzlich zu der über eine äussere Leitung verlaufenden Leitung 23' versehen. Dabei sind weiter der Stössel und der Kolben einstückig unter Bildung einer Einheit 29a',29b' mit je einer Kolbenstange 29a' und 29b' in den beiden Zylinderräumen 21',22' ausgebildet, wobei die eine Kolbenstange 29a' von der die Federkraft erzeugenden Feder 18' umgeben ist, die sich in dem einen Zylinderraum 21' befindet.

Ausserdem ist die zumindest eine Verbindung als die beiden Zylinderräume 21' und 22' verbindender Kanal 31',32' im Inneren der Einheit 29a',29b' ausgebildet und das wenigstens eine Rückschlagventil 30' in dem Kanal vorgesehen.

Der Kanal 31',32' weist der Einheit 29a',29b' eine in dem einen Zylinderraum mündende Querbohrung 31' auf und ist zwischen dieser und dem Kanal zu dem anderen Zylinderraum 22' das wenigstens eine Rückschlagventil 30' vorgesehen.

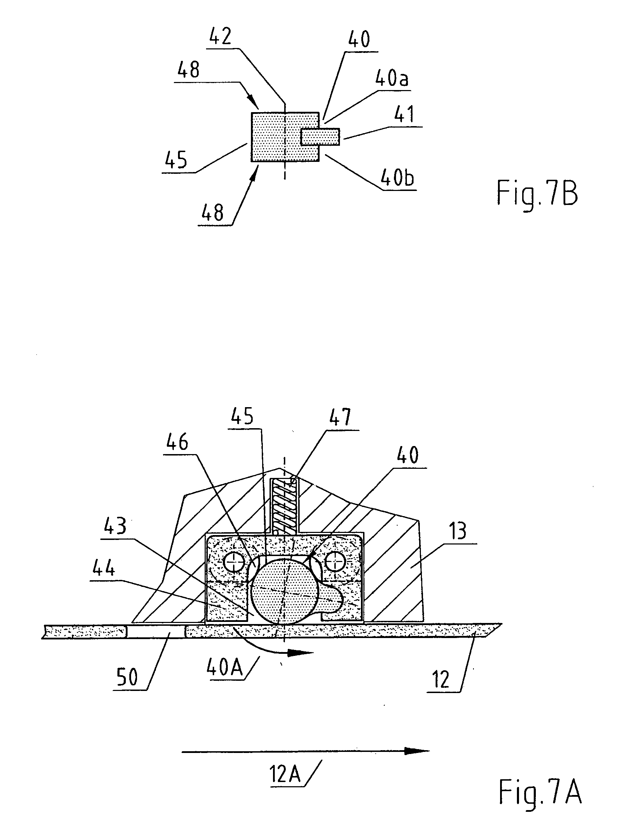

Die Figuren 7A bis 10B zeigen verschiedene Betriebszustände des Flansches 12 und des Kupplungsteils 13 der Sicherheitskupplung 10 in verschiedenen Betriebsständen, die bei Überschreiten eines einstellbaren Überlastdrehmomentes bei Überlast aus der definierten Antriebslage (Figuren 1 und 2) in einen Freilauf (Figuren 3 und 4) auskuppelt und in diesem bis zur Rückstellung in die Antriebslage mittels eines Rückstellelements, hier das Zweiwege-Zweipositions-Ventil (2/2-Ventil) 24, verbleibt, dessen Flansch 12 und dessen von diesem um dieselbe Drehachse angetriebenen Kupplungsteil 13 in der Antriebslage keine und nur im Freilauf (Figuren 3 und 4) eine relative Drehbewegung in der einen Drehrichtung zu dem Flansch 12 aufweist, wenn sich dieser beim Auskuppeln gemäss Richtungspfeil 12A (Figur 7A) bewegt.

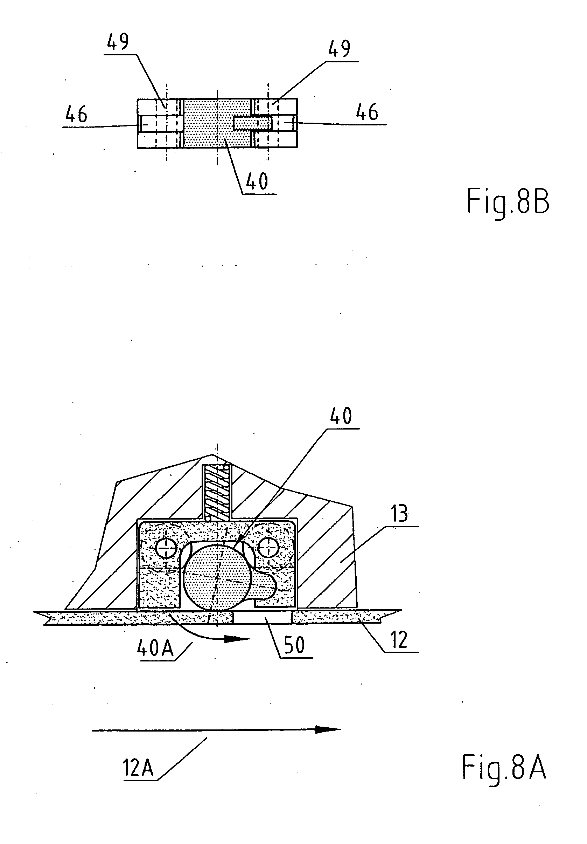

Das Kupplungsteil 13 weist dabei eine an diesem drehbar um eine Achse 42 gelagerte (und in Figur 7B in Druntersicht gezeigte) Rolle 40 mit einem radial vorspringenden Schaltzapfen 41 auf, der in der Mitte der Rolle 40 mit Abstand von deren beiden Stirnseiten 48 angeordnet ist, und ist der Flansch 12 mit einer Schaltöffnung 50 für den Schaltzapfen versehen ist. Die Rolle 40 ist in einem zu dem Flansch 12 hin mit einer Öffnung 43 versehenen Schlitten 44 angeordnet, über die sie (40) hervorsteht. Der Schlitten 44 weist ferner zwei voneinander beabstandet und parallel zu der Achse 42 der Rolle 40 und an deren Mantel 45 anliegende, an einem Lagerbolzen 49 (Figur 8B) gelagerte Lagerrollen 46 auf. Dabei ist der Schlitten 44 mit der Kraft einer Feder 47 in Richtung des Flansches 12 beaufschlagt und liegt kraftschlüssig auf der Oberseite des Flansches 12 auf.

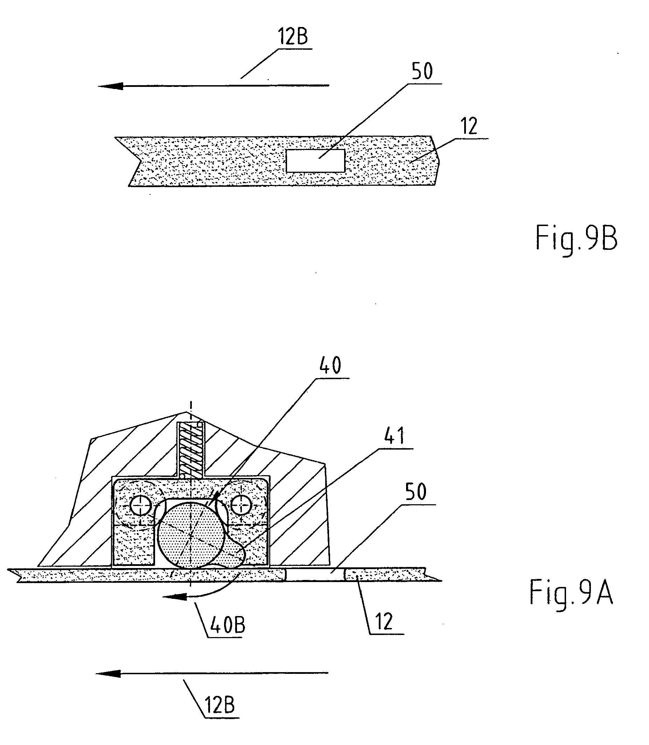

Aufgrund der Kraft der Feder 47 in Richtung auf den Flansch 12 wird zwischen diesem und der Rolle 40 zu Beginn von dessen Bewegung in Richtung des Richtungspfeils 12A zunächst eine die Rolle 40 (in Figur 7A entgegen dem Uhrzeiger gemäss Pfeil 40A bewegende) Rollreibung solange entstehen, bis der Schaltzapfen 41 an dem Schlitten und/oder den Lagerrollen 46 zur Anlage kommt, die danach in eine Gleitreibung übergeht, bei der der Mantel 45 der Rolle 40 an dem Flansch 12 entlang rutscht. Dadurch bedingt, ergibt sich ein Drehmoment gemäss Richtungspfeil 40A, wodurch die Rolle 40 in der in Figur 7A gezeigten Lage gehalten und deswegen die Schaltöffnung 50 wird von dem Schaltzapfen 41 in der einen Drehrichtung (bspw. in die in Figur 9A gezeigte Lage) überfahren wird, wie schematisch in Figur 8A gezeigt. Damit auf die Rolle 40 bei in der Schaltöffnung 50 befindlichem Schaltzapfen 41 zu Beginn des Auskupppelns von der Antriebslage in den Freilauf eine Rollreibung ausgeübt wird, ist der Schaltzapfen 41 in der Mitte der Rolle 40 mit Abstand von deren beiden Stirnseiten 48 so angeordnet, dass die sich daran beiderseits anschliessenden, je eine der Stirnseiten 48 aufweisenden Teilrollen 40a,b ausserhalb der Randes der Schaltöffnung 50 mit ihrem Mantel an der (kreisförmig gekrümmten) Oberfläche des Flansches 12 anliegen, weil die Schaltöffnung eine nur etwas grössere Breite als der Schaltzapfen 41 in axialer Richtung aufweist (Figur 9B).

Wird nach Auslösen der Sicherheitskupplung 10 im Freilauf der Antrieb in die andere Drehrichtung reversiert, so bewegt sich das Kupplungsteil 12 in der anderen Drehrichtung 12B, wie Figuren 9A und 9B zeigen. Dabei ensteht zwischen der Rolle 40 und der Oberfläche des Flansches 12 zunächst von der in Figur 8A bis zu jener gemäss Figur 9A dargestellten Lage eine kleine Drehung im Uhrzeiger gemäss Richtungspfeil 40B und zwar solange bis der Schaltzapfen 41 an dem Flansch 12 zu Anlage kommt, wobei die Rolle 40 danach in eine Gleitreibung übergeht (Figur 9A).

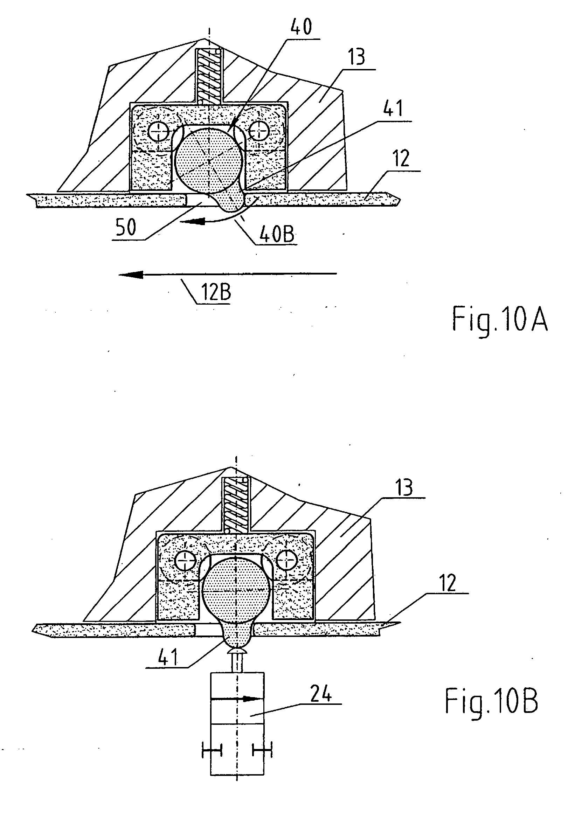

In diesem Zustand der Gleitreibung verbleibt die Rolle 40 nebst dem Schaltzapfen 41, wobei auf die beiden Teile infolgedessen ein Drehmoment gemäss Richtungspfeil 40B wirkt, das bei Herannahen der Schaltöffnung eine Drehung gemäss Richtungspfeil 40B und den Beginn des Eintauchens in die Schaltöffnung 50 nur in dieser anderen Drehrichtung zulässt, wie Figur 10A zeigt. Wenn der Schaltzapfen 41 eingetaucht ist, so kommt er bei Weiterbewegung des Flansches 12 an der -in Bewegungsrichtung- hinteren Abschlusskante der Schaltöffnung 50 zur Anlage und wird von dieser zwangsgeführt, wodurch infolgedessen auch sehr grosse Kräfte beim Betätigen des Rückstellelementes mit Vorteil erzielbar sind, weil dann jegliche Rückstellelemente eingesetzt werden können.

Das starr bezüglich des Flansches 12 festgelegte Rückstellelement 24 in Form des 2/2-Ventils ist in der Schaltöffnung 50 angeordnet, das aus Gründen der Übersichtlichkeit nur in Figur 10B dargestellt ist, und wird durch den in die Schaltöffnung 50 eintauchenden Schaltzapfen 41 von der hydraulisch gesperrten in die durchgeschaltete Schaltstellung genau bei der definierten Antriebslage des Kupplungsteils und des Flansches relativ zueinander unter Betätigung des Rückstellelementes bewegt, wodurch die Sicherkeitskupplung 10, also das Kupplungsteil 13 und der Flansch 12 wieder in die definierte Antriebslage eingekuppelt wird. Nach erneutem Reversieren des Antriebs ist dann keine relative Drehbewegung in einer Drehrichtung zwischen dem Kupplungsteil und dem Flansch möglich und die Sicherheitskupplung wieder einsatzbereit.

## Patentansprüche

1. Bei Überschreiten eines einstellbaren Überlastdrehmomentes bei Überlast aus einer Antriebslage in einen Freilauf auskuppelnde Sicherheitskupplung, mit einem um eine Drehachse drehbaren treibenden Flansch (12) und einem um dieselbe Drehachse drehbaren angetriebenen Kupplungsteil (13), wobei der Flansch (12) auf einem Lochkreis Ausnehmungen (14) und das Kupplungsteil (13) in der Antriebslage Rastkugeln (17) in die Ausnehmungen unter *einer* Federkraft hineindrückende, eine drehfeste Verbindung zwischen dem Flansch und dem Kupplungsteil bewirkende und bei Überschreiten des Überlastdrehmoments die Freigabe der drehfesten Verbindung unter Auskuppeln in den Freilauf bewirkende Halteeinrichtungen nebst einem Gehäuse (19) aufweist, wobei jeder Rastkugel (17) eine einzige Halteeinrichtung zugeordnet ist und sich die Rastkugel von der Antriebslage entgegen der Federkraft aus der Ausnehmung (14) in den Freilauf herausbewegt und an einem längs eines Gehäuses der Halteeinrichtung geführten Stößel (16) angeordnet ist, der eine die Federkraft erzeugende Feder (18) aufweist, wobei der Stößel (16) einen zwei Zylinderräume (21, 22) voneinander trennenden hydraulischen Kolben (20) von seiner der Antriebslage entsprechenden Ruhelage in eine dem Freilauf entsprechende Haltelage unter Verdrängung von Hydraulikflüssigkeit von dem einen Zylinderraum (21) über zumindest eine wenigstens ein zu diesem hin öffnendes (und zu dem anderen Zylinderraum (22) hin schließendes) Rückschlagventil (26, 27; 30') aufweisende Verbindung (23; 25; 31'; 32') in den anderen Zylinderraum (22) bewegt,
**dadurch gekennzeichnet,**
**dass** *ein* Rückstellelement (24) als 2/2-Ventil ausgebildet ist, das in seiner einen Schakstellung das Fließen der Hydraulikflüssigkeit in den anderen Zylinderraum sperrt und in seiner anderen Schaltstellung die beiden Zylinderräume (21, 22) miteinander verbindet, dass das Kupplungsteil (13) eine an diesem drehbar um eine Achse gelagerte Rolle (40) mit einem radial vorspringenden Schaltzapfen (41) aufweist, dass der Flansch (12) mit einer Schaltöffnung (50) für den Schaltzapfen (41) versehen ist, die von dem Schaltzapfen (41) in der einen Drehrichtung überfahren wird und in die der Schaltzapfen (41) nur in der anderen Drehrichtung eintaucht, dass das 2/2-Wege-Ventil in der Schaltöffnung (50) angeordnet ist und dass der in der anderen Drehrichtung in die Schaltöffnung (50) eintauchende Schaltzapfen (41) das in der Schaltöffnung (50) angeordnete 2/2-Wege-Ventil in der definierten Antriebslage des Kupplungsteils (13) und des Flansches (12) zueinander unter Schalten in die die beiden Zylinderräume (21, 22) miteinander verbindende andere Schaltstellung betätigt.

2. Sicherheitskupplung nach Anspruch 1, **dadurch gekennzeichnet, dass** die Rolle (40) in einem zu dem Flansch (12) hin mit einer Öffnung (43) versehenen Schlitten (44) angeordnet ist, über die sie hervorsteht.

3. Sicherheitskupplung nach Anspruch 2, **dadurch gekennzeichnet, dass** der Schlitten (44) zwei voneinander beabstandet und parallel zu der Achse (42) der Rolle und an deren Mantel (45) anliegende Lagerrollen (46) aufweist.

4. Sicherheitskupplung nach einem der vorhergehenden Ansprüche, **dadurch gekennzeichnet, dass** der Schlitten (44) mit der Kraft einer Feder (47) in Richtung des Flansches (12) beaufschlagt ist.

5. Sicherheitskupplung nach einem der vorhergehenden Ansprüche, **dadurch gekennzeichnet, dass** der Schaltzapfen (41) in der Mitte der Rolle (40) mit Abstand von deren beiden Stirnseiten (48) angeordnet ist.

## Claims

1. A safety clutch which decouples from a drive position into overrun in the event of an overstepping of an adjustable overload torque in the case of an overload,
with a driving flange (12) rotatable about an axis of rotation and a driven clutch part (13) rotatable about the same axis of rotation,
wherein the flange (12) comprises recesses (14) in a circle of holes, and the clutch part (13) comprises locking balls (17) pressing into the recesses under a spring force in the drive position causing a rotationally rigid connection between the flange and the clutch part, and holding devices alongside a housing (19) causing the release of the rotationally rigid connection with a decoupling into overrun in the event of an overstepping of the overload torque,
wherein a single holding device is allocated to each locking ball (17), and the locking ball moves from the drive position against the spring force, out of the recess (14), into overrun and is arranged on a plunger (16), guided alongside the holding device which provides a spring (18) generating the spring force, wherein the plunger (16) moves a hydraulic piston (20) separating two cylinder chambers (21, 22) from one another from its resting position, corresponding to the drive position, into a holding position, corresponding to the overrun, forcing hydraulic fluid from the one cylinder chamber (21), via at least one connection (23; 125; 31'; 32') comprising at least one non-return valve (26, 27; 30') opening towards the latter (and closing towards the other cylinder chamber (22)), into the other cylinder chamber (22),
**characterised in that**
a resetting element (24) is embodied as a 2/2-way valve, which, in its one switching position, blocks the flow of the hydraulic fluid into the other cylinder chamber and, in its other switching position, connects the two cylinder chambers (21, 22) to one another,
that the clutch part (13) comprises a roller (40) with a radially projecting switching pin (41) mounted on the latter in a manner rotatable about an axis,
that the flange (12) is provided with a switching aperture (50) for the switching pin (41) which is travelled over by the switching pin (41) in the one direction of rotation, and into which the switching pin (41) plunges only in the other direction of rotation,
that the 2/2-way valve is arranged in the switching aperture (50) and
that the switching pin (41) plunging into the switching aperture (50) in the other direction of rotation activates the 2/2-wary valve arranged in the switching aperture (50) in the defined operating position of the clutch part (13) and the flange (12) relative to one another, thereby switching into the other switching position connecting the two cylinder chambers (21, 22) to one another.

2. The safety clutch according to claim 1,
**characterised in that**
the roller (40) is arranged in a carriage (44) provided with an opening (43) towards the flange (12) beyond which it projects.

3. The safety clutch according to claim 2,
**characterised in that**
the carriage (44) provides two bearing rollers (46) distanced from one another and parallel to the axis (42) of the roller and in contact with its lateral surface (45).

4. The safety clutch according to any one of the preceding claims,
**characterised in that**
the carriage (44) is impinged upon by the force of a spring (47) in the direction towards the flange (12).

5. The safety clutch according to any one of the preceding claims,
characeterised in that
the switching pin (41) is arranged in the middle of the roller (40) at a distance from its two end faces (48).

## Revendications

1. Accouplement de sécurité se désaccouplant d'une position d'entraînement et passant en roue libre en cas de surcharge, lorsqu'un couple de surcharge ajustable est dépassé, comprenant une bride menante (12) pouvant tourner autour d'un axe de rotation et un élément d'accouplement (13) entraîné en rotation autour du même axe de rotation, la bride (12) présentant des évidements (14) formant un cercle de trous et l'élément d'accouplement (13), comprenant des dispositifs de retenue pourvus d'un boîtier (19), lesquels, dans la position d'entraînement, enfoncent des billes d'encliquetage (17) dans les évidements sous l'effet d'une force élastique, établissent une liaison solidaire en rotation entre la bride et l'élément d'accouplement et provoquent la libération de la liaison solidaire en rotation, lorsque le couple de surcharge est dépassé, avec désaccouplement et passage en roue libre, un seul dispositif de retenue étant associé à chaque bille d'encliquetage (17) et la bille d'encliquetage, en partant de la position d'entraînement à l'encontre de la force élastique, se déplaçant hors de l'évidement (14) et passant en roue libre et étant disposée sur un poussoir (16) guidé le long d'un boîtier du dispositif de retenue, lequel poussoir comprend un ressort (18) produisant la force élastique, le poussoir (16) déplaçant un piston hydraulique (20), séparant deux espaces cylindriques (21, 22) l'un de l'autre, de sa position de repos correspondant à la position d'entraînement dans une position de retenue correspondant à la roue libre avec refoulement du liquide hydraulique d'un des espaces cylindriques (21), par l'intermédiaire d'au moins un raccordement (23 ; 25 ; 31' ; 32') comprenant une soupape de retenue (26, 27 ; 30') s'ouvrant en direction de cet espace cylindrique (et se fermant en direction de l'autre espace cylindrique (22)), dans l'autre espace cylindrique (22),
**caractérisé en ce que**
un élément de rappel (24) est réalisé sous la forme d'une soupape à deux voies, laquelle, dans l'une de ses positions de commutation, empêche l'écoulement du liquide hydraulique dans l'autre espace cylindrique et laquelle, dans son autre position de commutation, relie ensemble les deux espaces cylindriques (21, 22), **en ce que** l'élément d'accouplement (13) comprend un rouleau (40) monté sur ledit élément de manière à pouvoir tourner autour d'un axe et pourvu d'un goujon de commutation (41) radialement en saillie, **en ce que** la bride (12) est munie d'un orifice de commutation (50) pour le goujon de commutation (41), lequel orifice est franchi par le goujon de commutation (41) dans une des directions de rotation et dans lequel le goujon de commutation (41) ne pénètre que dans l'autre direction de rotation, **en ce que** la soupape à deux voies est disposée dans l'orifice de commutation (50) et **en ce que** le goujon de commutation (41) pénétrant dans l'orifice de commutation (50) dans l'autre direction de rotation actionne la soupape à deux voies disposée dans l'orifice de commutation (50) dans la position d'entraînement définie de l'élément d'accouplement (13) et de la bride (12) l'un avec l'autre avec commutation dans l'autre position de commutation reliant ensemble les deux espaces cylindriques (21, 22).

2. Accouplement de sécurité selon la revendication 1, **caractérisé en ce que** le rouleau (40) est disposé dans un coulisseau (44) pourvu d'un orifice (43) en direction de la bride (12), orifice par lequel ledit rouleau fait saillie.

3. Accouplement de sécurité selon la revendication 2, **caractérisé en ce que** le coulisseau (44) comprend deux galets de roulement (46) espacés l'un de l'autre et reposant parallèlement à l'axe (42) du rouleau et contre l'enveloppe (45) de celui-ci.

4. Accouplement de sécurité selon l'une quelconque des revendications précédentes, **caractérisé en ce que** le coulisseau (44) est exposé à la force d'un ressort (47) en direction de la bride (12).

5. Accouplement de sécurité selon l'une quelconque des revendications précédentes, **caractérisé en ce que** le goujon de commutation (41) est disposé au centre du rouleau (40) à une certaine distance des deux faces frontales (48) de ce dernier.
